# DEMANDE DE BREVET EUROPEEN

(11) **EP 2 009 889 A2**
(43) Date de publication de la demande: **31.12.2008**
(21) Numéro de dépôt: 08104347.3
(22) Date de dépôt: 10.06.2008
(51) Int. Cl.: H04M 3/42

(54) **Procédé de sélection d'au moins un accès physique à au moins une offre de services, dispositif et produit programme d'ordinateur correspondants**

(30) Priorité: 27.06.2007 FR 0756059
(71) Demandeur: FRANCE TELECOM, 75015 Paris (FR)
(72) Inventeur: Perrufel, Micheline, 35740, PACE (FR); Guegan, Delphine, 35830, BETTON (FR)
(74) Mandataire: Bioret, Ludovic

(57) **Abrégé**

L'invention concerne un procédé de sélection d'au moins un accès physique, parmi une pluralité d'accès physiques, permettant de bénéficier d'au moins une offre de services préalablement souscrite par un utilisateur et associée à un accès physique d'origine par l'intermédiaire d'un multiplexeur de ligne d'abonné numérique d'origine.

Selon l'invention, un tel procédé comprend :
une étape d'affectation de ladite au moins une offre de services à un multiplexeur de ligne d'abonné numérique raccordé audit accès physique, ledit multiplexeur de ligne d'abonné numérique étant distinct dudit multiplexeur de ligne d'abonné numérique d'origine.

## Description

La présente invention se situe dans le domaine des offres de services proposées aux utilisateurs par l'intermédiaire de leur ligne téléphonique.

Plus précisément, l'invention concerne l'amélioration de l'accès des utilisateurs aux offres de services auxquelles ils ont souscrits.

A l'heure actuelle, on connaît une technique permettant à un utilisateur de conserver son numéro de téléphone lorsqu'il déménage par exemple. Cette conservation du numéro passe par la fermeture de la ligne téléphonique antérieure et par une réouverture de la nouvelle ligne téléphonique. Le numéro de téléphone, c'est-à-dire l'identifiant d'accès au réseau, peut alors être utilisé pour accéder au service de téléphonie par l'utilisateur qui a déménagé.

Un inconvénient de cette technique de l'art antérieur réside dans le fait que pour permettre à l'utilisateur de conserver son numéro, une intervention manuelle est nécessaire, consistant à transférer un numéro d'une première ligne téléphonique à une deuxième ligne téléphonique.

De plus, cette technique nécessite la fermeture de la première ligne téléphonique, de sorte que l'opération est irréversible. L'utilisateur ne peut définitivement plus utiliser son numéro de téléphone pour téléphoner depuis son ancienne adresse.

L'invention offre une solution qui ne présente pas les inconvénients de l'art antérieur, grâce à un procédé original de sélection d'au moins un accès physique, parmi une pluralité d'accès physiques, permettant de bénéficier d'au moins une offre de services préalablement souscrite par un utilisateur et associée à un accès physique d'origine par l'intermédiaire d'un multiplexeur de ligne d'abonné numérique d'origine.

Selon l'invention, un tel procédé comprend :
- une étape d'affectation de ladite au moins une offre de services à un multiplexeur de ligne d'abonné numérique raccordé audit accès physique, ledit multiplexeur de ligne d'abonné numérique étant distinct dudit multiplexeur de ligne d'abonné numérique d'origine.

On entend par accès physique, les dispositifs physiques qui permettent de communiquer sur un réseau, tels que par exemple une paire de câbles torsadés ou un accès sans fil par le biais d'une carte idoine. Un tel accès physique peut aussi être appelé ligne téléphonique.

Ainsi, le procédé selon l'invention permet à un utilisateur d'avoir accès à son offre de services quelque soit l'endroit où il se trouve. Une telle possibilité est offerte en dissociant l'offre de services de la ligne téléphonique (de l'accès physique) en tant que telle. Donc, à la différence des techniques de l'art antérieur, l'utilisateur peut avoir accès depuis différents endroits aux services auxquels il a souscrit, sans qu'il soit nécessaire de réaliser une intervention manuelle au niveau de la ligne téléphonique où il souhaite accéder à ses offres.

Par exemple, en cas de déménagement de l'utilisateur, le procédé selon l'invention permet de transférer automatiquement et simplement l'ensemble des services souscrits à la nouvelle adresse physique de l'utilisateur.

En particulier, le procédé selon l'invention comprend en outre, préalablement à l'étape d' affectation :
- une étape d'identification dudit accès physique ;
- une étape de vérification d'une adéquation entre ledit accès physique identifié et ladite au moins une offre de services.

Ainsi, le procédé selon l'invention permet d'éviter une affectation incomplète ou défectueuse des services souscrits par l'utilisateur à une ligne téléphonique qui n'est pas prévue pour mettre en oeuvre ces services.

Selon un aspect particulier de l'invention, l'étape de vérification comprend une étape de détection d'une présence d'un multiplexeur de ligne d'abonné numérique raccordé audit accès physique.

Ainsi, le procédé selon l'invention permet de s'assurer de la prise en charge optimale des services de l'utilisateur. L'invention permet donc d'accroître grandement la satisfaction de celui-ci.

Selon une caractéristique particulière de l'invention, le procédé comprend :
- une étape de réception d'une requête d'un utilisateur pour la sélection dudit au moins un accès physique;
- une étape de validation de ladite requête en fonction d'au moins un paramètre.

Ainsi, l'invention permet à un utilisateur de demander l'accès à ses services à un autre endroit que celui auquel ils ont été souscrits et de n'autoriser un tel accès qu'après vérification et validation qu'une telle demande est recevable, suivant un certain nombre de paramètres, qui peuvent être associés à l'utilisateur ou à l'accès physique.

En particulier, l'étape de validation comprend une sous-étape de contrôle d'un droit dudit utilisateur à demander ledit accès.

De plus, selon un aspect particulier de l'invention, l'étape de validation comprend en outre :
- une sous-étape d'examen d'une compatibilité de ladite au moins une offre de services avec une éventuelle deuxième offre de services préalablement associée audit accès physique ;
- une sous-étape de « calcul » d'une offre de service composite issue de ladite au moins une offre de services et de ladite deuxième offre de services préalablement associée audit accès physique.

Ainsi, l'invention permet de définir des offres multi-utilisateurs et multi-services en fonction des localisations de ces utilisateurs.

Ainsi par exemple, les offres actuelles du marché étant des accès à 1 Mbits/s, 8 Mbits/s ou 18 Mbits/s, si un premier utilisateur est titulaire d'une offre permettant un accès à l'Internet à un débit de 1 Mbits/s (ou 8 Mbits/s) et qu'un deuxième est également titulaire d'une telle offre, alors l'offre composite pourrait être une offre permettant un accès à 8 Mbits/s (ou 18 Mbits/s dans le cas d'offres de services à 8 Mbits/s pour chacun des deux utilisateurs au départ), permettant d'offrir une continuité de qualité et de débit aux utilisateurs.

Dans un autre exemple, si l'accès physique n'est associé à aucune offre, l'offre composite correspond à l'offre souscrite par l'utilisateur.

Encore dans un autre exemple, l'offre composite peut correspondre à un accès Internet d'un premier utilisateur et un accès à la voix sur IP d'un deuxième utilisateur.

Selon une caractéristique particulière de l'invention, le procédé comprend postérieurement à l'étape d'affectation :
- une étape de suspension, au niveau dudit accès physique d'origine, desdits services de ladite au moins une offre de services.

Ainsi, on ne permet pas d'utiliser simultanément un même ensemble de services dans plusieurs localisations physiques différentes.

L'invention concerne également un dispositif de sélection d'au moins un accès physique, parmi une pluralité d'accès physiques, permettant de bénéficier d'au moins une offre de services préalablement souscrite par un utilisateur et associée à un accès physique d'origine par l'intermédiaire d'un multiplexeur de ligne d'abonné numérique d'origine.

Selon l'invention, un tel dispositif comprend des moyens d'affectation de ladite au moins une offre de services à un multiplexeur de ligne d'abonné numérique raccordé audit accès physique, ledit multiplexeur de ligne d'abonné numérique étant distinct dudit multiplexeur de ligne d'abonné numérique d'origine.

Il s'agit par exemple d'un routeur, disposant de moyens d'affectation d'un offre de services à un DSLAM, de tels moyens pouvant être par exemple des relais.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de sélection décrit précédemment.

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un exemple d'architecture simplifiée d'un système de fourniture d'offre de services ;
- la figure 2 présente un exemple de système dans lequel est mis en oeuvre le procédé selon un mode de réalisation de l'invention ;
- la figure 3 illustre les différentes étapes du procédé selon un mode de réalisation particulier de l'invention ;

Dans le cadre de la présente invention, on s'intéresse donc à l'amélioration de l'accès des utilisateurs aux offres de services auxquelles ils ont préalablement souscrit.

Une telle offre de services peut comprendre un ou plusieurs services tels que l'ADSL (« Asymmetric Digital Subscriber Line » pour « Ligne d'abonné numérique à débit asymétrique »), la voix sur IP (« Internet Protocol » pour « Protocole Internet ») ou encore la télévision par Internet.

L'accès à de tels services par l'utilisateur se fait par l'intermédiaire d'une ligne téléphonique, encore appelé accès physique dans la suite de la description, et l'invention concerne en particulier l'affectation d'une offre de services à une ligne téléphonique.

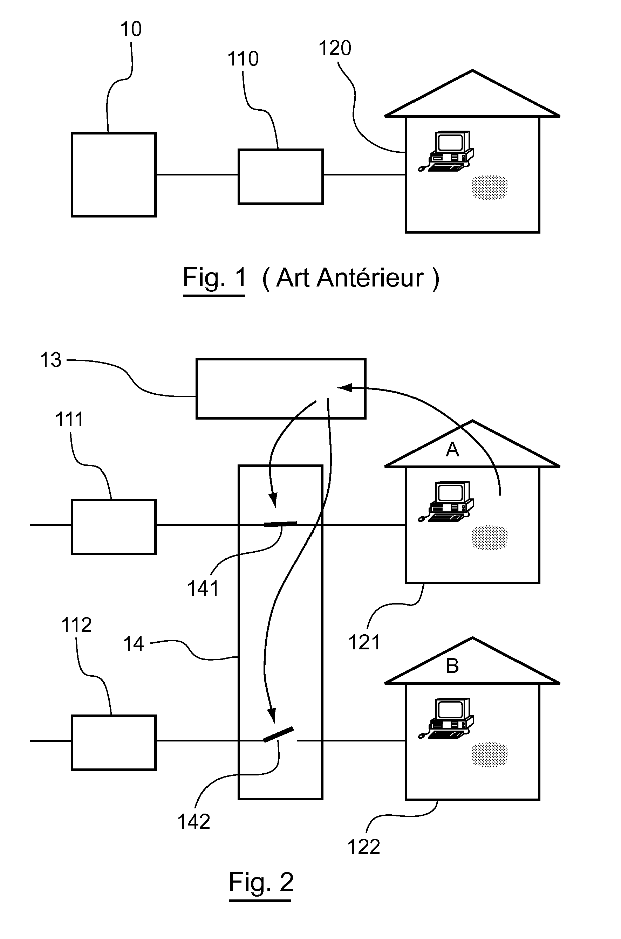

Un exemple d'architecture simplifiée d'un système permettant à un utilisateur l'accès à une telle offre de services est présenté en relation avec la figure 1.

Une ligne téléphonique dans une résidence 120, ou point d'accès physique A, est raccordée à un équipement 110 appelé « multiplexeur de ligne d'abonné numérique » (« DSLAM » pour « Digital Subscriber Line Access Multiplexer » en anglais).

Un tel équipement permet notamment de fournir sur une ligne téléphonique des services de type *x*DSL (de l'anglais « Digital Subscriber Line » pour « ligne d'abonné numérique »).

Le DSLAM 110 est lui-même relié à un répartiteur 10 (situé classiquement dans un central téléphonique), qui a pour fonction d'effectuer les liaisons entre les lignes téléphoniques des abonnés et les infrastructures permettant de fournir de l'image, de la voix ...

Actuellement, un utilisateur qui souscrit à une offre de services, indique son adresse ou son numéro de téléphone à son fournisseur de services afin que celui-ci puisse localiser la ligne téléphonique correspondante.

Le fournisseur de services vérifie si la ligne téléphonique est configurée de telle manière à pouvoir offrir les services demandés par l'utilisateur, c'est-à-dire vérifie si la ligne téléphonique est « éligible ». Un tel critère d'éligibilité correspond généralement à la présence ou non d'un DSLAM.

Dans le cas présenté en figure 1, l'utilisateur résidant en 120 peut souscrire à une offre de services, sa ligne téléphonique étant raccordée à un multiplexeur de ligne d'abonné numérique 110.

Il en résulte actuellement que l'offre de services souscrite par l'utilisateur est associée à la ligne téléphonique de la résidence 120, et au DSLAM 110 qui y est raccordé.

A l'heure actuelle, si un utilisateur souhaite bénéficier de l'offre de services à laquelle il a souscrite à un deuxième endroit, distinct de celui où il l'a souscrite (la résidence 120 dans l'exemple de la figure 1), le fournisseur de services doit mettre en oeuvre une intervention manuelle.

Cette intervention manuelle consiste d'abord à raccorder la ligne téléphonique du deuxième endroit à un DSLAM, afin de pouvoir offrir à l'utilisateur les mêmes services que ceux offerts dans sa résidence 120. Ensuite, l'intervention consiste à affecter l'offre de services souscrite dans sa résidence 120 à la ligne téléphonique du deuxième endroit.

Ainsi, un inconvénient de cette technique de l'art antérieur réside donc principalement dans la nécessité d'une intervention manuelle pour permettre à un utilisateur d'accéder à son offre de services à un endroit autre que celui où il l'a souscrite. La problématique posée est donc la même que dans le cas d'une conservation, par un abonné, de son numéro de téléphone lors d'un déménagement.

Le procédé de sélection selon l'invention permet de s'affranchir de cette intervention manuelle en intégrant le fait que toutes les lignes téléphoniques sont préalablement raccordées à un DSLAM.

Le principe général de l'invention repose sur l'affectation d'une offre de services à un accès physique, par l'intermédiaire d'un DSLAM, configuré de manière logicielle pour offrir les services en question.

Selon l'invention, une offre de services n'est plus associée à une ligne téléphonique prédéfinie, mais peut être affectée à n'importe quelle ligne téléphonique, sur demande de l'utilisateur qui l'a souscrite.

On présente maintenant, en relation avec la figure 2, un exemple de système dans lequel est mise en oeuvre l'invention selon un mode de réalisation particulier.

Dans cet exemple, un utilisateur a souscrit à une offre de services dans sa résidence principale 121 (A), et souhaite avoir accès à cette même offre quand il se trouve dans sa résidence secondaire 122 (B).

Classiquement la ligne téléphonique (ou l'accès physique de A) est raccordé à un DSLAM 111 qui est configuré de manière à permettre la fourniture de tous les services souscrits.

De même, l'accès physique de B peut être raccordé à un autre DSLAM 112, distinct du DSLAM 111.

Ce DSLAM peut être lui-même configuré pour fournir une offre de services à la ligne téléphonique de la résidence 122. Dans ce cas, cette ligne téléphonique est effectivement raccordée au DSLAM 112.

Le DSLAM 112 peut être simplement installé et prêt à être raccordé à la ligne téléphonique de la résidence 122, comme c'est le cas sur la figure 2.

Pour mettre en oeuvre le procédé selon l'invention, le système comprend également un routeur 13, pilotant une pluralité de relais 14. Sur la figure 2, deux relais 141 et 142 sont représentés, reliés chacun d'une part à un accès physique (respectivement celui de la résidence 121 et celui de la résidence 122) et d'autre part à un DSLAM (respectivement le DSALM 111 et le DSLAM 112).

Dans cet exemple, le routeur 13, en activant au moins un relais 142, permet l'affectation d'une offre de services à la ligne téléphonique de la résidence 122.

Nous décrivons maintenant deux modes de réalisation de l'invention, dans lesquels les principales étapes sont communes, la principale différence étant la suspension ou non de l'accès à l'offre de services à l'endroit où elle a été souscrite.

En effet, un utilisateur qui souhaite avoir accès, temporairement ou non, à son offre de services par exemple dans sa résidence secondaire, peut également souhaiter conserver simultanément l'accès à cette même offre dans sa résidence principale. Ce mode de réalisation correspond à une duplication d'une offre de services.

Dans un autre mode de réalisation, un utilisateur peut souhaiter accéder, temporairement, à son offre de services dans sa résidence secondaire sans conserver l'accès à ces mêmes services dans sa résidence principale. Dans ce cas, on parle de transfert d'offre de services.

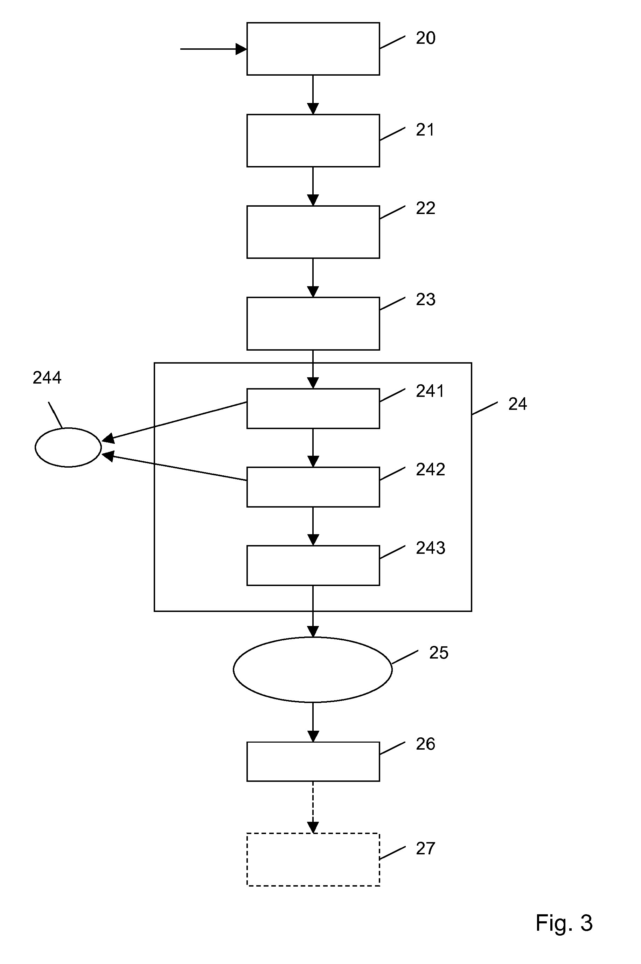

On décrit donc maintenant, en relation avec la figure 3, les différentes étapes du procédé de sélection d'un accès physique selon l'invention, dans le système de la figure 2.

Les étapes et états 20 à 26 sont communs aux deux modes de réalisation (duplication et transfert), et la dernière étape 27 étant spécifique au transfert.

Dans un premier temps, on considère donc qu'un utilisateur a souscrit à une offre de services dans sa résidence principale et qu'il souhaite pouvoir en bénéficier dans sa résidence secondaire. Pour cela, il va émettre une requête vers son fournisseur de services, dans laquelle il va spécifier des informations telles que, par exemple :
- ses coordonnées ;
- les références de son offre de services ;
- l'adresse de sa résidence secondaire ...

Lors de l'étape 20 de réception d'une requête, le procédé de sélection reçoit donc la requête de l'utilisateur indiquant son souhait d'accéder à son offre de service dans sa résidence secondaire.

L'étape suivante 21 d'identification consiste à identifier la ligne téléphonique, ou l'accès physique, correspondant à l'adresse de la résidence secondaire spécifiée par l'utilisateur lors de sa requête.

En d'autres termes, le procédé selon l'invention vérifie si une ligne téléphonique est bien installée à l'adresse spécifiée par l'utilisateur, qu'elle soit ou non en service, c'est-à-dire qu'elle soit ou non déjà associée à un numéro d'appel. Si une telle ligne existe, elle est associée à un identifiant unique, identifiant qui sert donc par la suite au procédé pour identifier la ligne (l'accès physique).

Une fois l'accès physique identifié, c'est-à-dire l'identifiant récupéré, le procédé selon l'invention vérifie si cet accès est éligible, lors d'une étape 22 de vérification de la présence d'un DSLAM. Cette vérification consiste à chercher si un DSLAM a été installé et associé à l'identifiant de la ligne, qu'il soit raccordé à la ligne ou non.

Ensuite, le procédé de sélection selon l'invention détermine, lors d'une étape 23 de vérification, l'adéquation entre l'accès physique identifié lors de l'étape 21, et l'offre de services souscrite par l'utilisateur.

Ainsi, le procédé s'assure que le DSLAM associé à la ligne téléphonique de la résidence secondaire peut être configuré de manière à pouvoir fournir tous les services, ou une partie des services souscrits par l'utilisateur. Par exemple, un utilisateur peut avoir souscrit à une offre de service incluant un service de télévision. Or, un tel service n'est accessible que sous certaines conditions, notamment de distance, entre le terminal de réception et le DSLAM. Ainsi, il n'est pas assuré que tous les services auxquels l'utilisateur a souscrit soient accessibles à l'endroit où le transfert doit être effectué.

En résumé, les étapes 21 à 23 effectuent donc une vérification « matérielle », consistant à s'assurer que la ligne téléphonique de la résidence secondaire de l'utilisateur est apte à fournir les services auxquels il souhaite accéder.

Dans un deuxième temps, le procédé selon l'invention effectue une vérification relative à l'utilisateur et à la configuration détaillée de la ligne téléphonique de la résidence secondaire.

Lors d'une étape 24 de validation de la requête, la demande de l'utilisateur est étudiée pour être validée ou non.

Cette étape 24 comprend plusieurs sous-étapes, mises en oeuvre successivement, en fonction du résultat de la sous-étape précédente.

Une sous-étape 241 de contrôle consiste à valider que l'utilisateur a le droit de faire cette requête.

Ainsi, par exemple, une offre de services peut comprendre une option, payante ou non, spécifiant que l'utilisateur peut demander à bénéficier de cette offre dans plusieurs endroits différents. Ces différents endroits peuvent être définis ou non à l'avance, au moment de la souscription de l'offre.

Dans un autre exemple, l'utilisateur peut à tout moment demander une autorisation, en payant ou non un supplément, lui permettant de faire une requête pour accéder à son offre dans plusieurs endroits.

Si l'utilisateur ne bénéficie pas de ce droit à effectuer une telle requête, la requête n'est pas validée (état 244) et n'aboutit pas à l'affectation de l'offre de services à la ligne téléphonique de la résidence secondaire de l'utilisateur.

Par contre, si l'utilisateur a effectivement le droit de faire cette requête, le procédé selon l'invention met en oeuvre une sous-étape d'examen 242 plus détaillé de la configuration de la ligne téléphonique de la résidence secondaire.

Lors de cette sous-étape, le procédé selon l'invention vérifie notamment si une deuxième offre de services est déjà préalablement associée à la ligne téléphonique de la résidence secondaire.

Si tel est le cas, le procédé selon l'invention vérifie si cette deuxième offre de services est compatible avec la première, c'est-à-dire si les deux offres peuvent « cohabiter » sur la ligne téléphonique.

Par exemple, un deuxième utilisateur ayant souscrit à cette deuxième offre de services peut avoir spécifiquement interdit tout transfert ou duplication d'une autre offre vers l'accès physique correspondant à cette deuxième offre. Dans ce cas, la requête du premier utilisateur n'est pas validée (état 244) et n'aboutit pas à l'affectation de l'offre de services à la ligne téléphonique de la résidence secondaire de l'utilisateur.

Si la compatibilité des deux offres de services est établie, ou si la ligne téléphonique de la résidence secondaire n'est préalablement associée à aucune offre de services, le procédé selon l'invention peut alors mettre en oeuvre une étape de calcul d'une offre de service 243, par exemple appelée offre de services composite.

On peut considérer par exemple une première offre de services correspondant à un accès Internet à un débit de 8 Mbits/s et une deuxième offre de services correspondant également à un accès Internet à un débit de 8 Mbits/s.

A l'heure actuelle, une telle configuration où deux utilisateurs accèdent à Internet dans un même lieu, par l'intermédiaire d'une même ligne téléphonique, se traduit par un partage du débit offert entre les deux utilisateurs. En d'autres termes, dans notre exemple, chacun des deux utilisateurs ne peut plus bénéficier du débit correspondant à son offre de services, car le débit associé à la ligne téléphonique est partagé entre les deux utilisateurs.

En revanche, le procédé selon l'invention permet d'offrir une continuité de qualité et de débit aux deux utilisateurs, en calculant une offre composite correspondant dans notre exemple à un accès à Internet à un débit de 18 Mbits/s (si l'on considère que les offres du marché sont actuellement de 1 Mbits/s, 8 Mbits/s ou 18 Mbits/s).Dans le cas où la ligne téléphonique de la résidence secondaire n'est préalablement associée à aucune offre de services, cette offre de services composite correspond à l'offre de service d'origine souscrite par l'utilisateur dans sa résidence principale, exceptés les éventuels services qui ne peuvent pas être mis en oeuvre dans la ligne de la résidence secondaire.

Dans le cas où une offre de services est préalablement associée à la résidence secondaire, l'offre composite peut être constituée des services de chacune des deux offres si ces services sont compatibles (et peuvent être fournis sur une même ligne téléphonique), ou d'une partie des services de chacune des deux offres. Ainsi, l'invention permet de mettre en oeuvre de manière concrète la mutualisation des ressources auxquels des utilisateurs différents ont souscrits.

Par exemple, l'offre composite peut correspondre à un accès Internet souscrit par le premier utilisateur dans sa résidence principale et un accès à la voix sur IP souscrite dans la résidence secondaire.

Une fois l'offre composite calculée, la requête de l'utilisateur est validée (état 25) et l'affectation de l'offre de services composite à la ligne téléphonique de la résidence secondaire est réalisée lors d'une étape 26.

Concrètement, lors de cette étape 26, le routeur 13 (figure 2) active le relais 142 de manière à ce que la ligne téléphonique de la résidence secondaire soit raccordée au DSLAM 112, et celui-ci est configuré, de manière classique et connue de l'homme du métier, de façon à offrir les services souhaités à l'utilisateur, par exemple par le biais d'un téléchargement logiciel d'une configuration sur le DSLAM.

Celui-ci peut alors bénéficier de son offre de services dans sa résidence secondaire, ainsi que dans sa résidence principale.

Dans ce cas, des options peuvent également être mises en oeuvre, selon les souhaits de l'utilisateur.

Par exemple, l'utilisateur peut désigner l'une des lignes téléphoniques de ses deux résidences comme étant la ligne « mère », c'est-à-dire la ligne recevant les appels entrants.

Une autre option peut également consister à permettre le basculement des appels entrants d'une ligne sur l'autre en cas de non réponse de la ligne sur laquelle ils arrivent dans un premier temps.

Si l'utilisateur a spécifié qu'il souhaite transférer son offre de services vers sa résidence secondaire, alors une étape supplémentaire 27 de suspension est mise en oeuvre.

Cette étape consiste à suspendre, temporairement, l'accès à l'offre de services à partir de la résidence principale.

Concrètement, le routeur 13 active le relais 141, de manière à ce que la ligne téléphonique de la résidence principale ne soit plus raccordée au DSLAM 111.

Dans ce cas, l'utilisateur n'a accès aux services auxquels il a souscrit que depuis sa résidence secondaire, jusqu'à ce qu'il fasse la requête de transfert inverse de son offre (de sa résidence secondaire vers sa résidence principale).

## Revendications

1. Procédé de sélection d'au moins un accès physique, parmi une pluralité d'accès physiques, permettant de bénéficier d'au moins une offre de services préalablement souscrite par un utilisateur et associée à un accès physique d'origine par l'intermédiaire d'un multiplexeur de ligne d'abonné numérique d'origine, **caractérisé en ce qu'**il comprend :
une étape d'affectation de ladite au moins une offre de services à un multiplexeur de ligne d'abonné numérique raccordé audit accès physique, ledit multiplexeur de ligne d'abonné numérique étant distinct dudit multiplexeur de ligne d'abonné numérique d'origine.

2. Procédé de sélection selon la revendication 1, **caractérisé en ce qu'**il comprend en outre, préalablement à ladite étape d'affectation :
- une étape d'identification dudit accès physique ;
- une étape de vérification d'une adéquation entre ledit accès physique identifié et ladite au moins une offre de services.

3. Procédé selon la revendication 2, **caractérisé en ce que** ladite étape de vérification comprend :
- une étape de détection d'une présence d'un multiplexeur de ligne d'abonné numérique raccordé audit accès physique.

4. Procédé de sélection selon l'une quelconque des revendications 1 à 3, **caractérisé en ce qu'**il comprend :
- une étape de réception d'une requête d'un utilisateur pour la sélection dudit au moins un accès physique ;
- une étape de validation de ladite requête en fonction d'au moins un paramètre.

5. Procédé de sélection selon la revendication 4, **caractérisé en ce que** ladite étape de validation comprend :
- une sous-étape de contrôle d'un droit dudit utilisateur à demander ledit accès.

6. Procédé de sélection selon la revendication 5, **caractérisé en ce que** ladite étape de validation comprend en outre :
- une sous-étape d'examen d'une compatibilité de ladite au moins une offre de services avec une éventuelle deuxième offre de services préalablement associée audit accès physique ;
- une sous-étape de « calcul » d'une offre de service composite issue de ladite au moins une offre de services et de ladite deuxième offre de services préalablement associée audit accès physique.

7. Procédé de sélection selon l'une quelconque des revendications 1 à 6 **caractérisé en ce qu'**il comprend postérieurement à ladite étape d'affectation :
- une étape de suspension, au niveau dudit accès physique d'origine, desdits services de ladite au moins une offre de services.

8. Dispositif de sélection d'au moins un accès physique, parmi une pluralité d'accès physiques, permettant de bénéficier d'au moins une offre de services préalablement souscrite par un utilisateur et associée à un accès physique d'origine par l'intermédiaire d'un multiplexeur de ligne d'abonné numérique d'origine, **caractérisé en ce qu'**il comprend :
des moyens d'affectation de ladite au moins une offre de services à un multiplexeur de ligne d'abonné numérique raccordé audit accès physique, ledit multiplexeur de ligne d'abonné numérique étant distinct dudit multiplexeur de ligne d'abonné numérique d'origine.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de sélection selon l'une au moins des revendications 1 à 7.
